Europäisches Patentamt

European Patent Office

Office européen des brevets

(19)

(11) Veröffentlichungsnummer : **0 442 892 B1**

# (12) EUROPÄISCHE PATENTSCHRIFT

(45) Veröffentlichungstag der Patentschrift :
**17.03.93 Patentblatt 93/11**

(51) Int. Cl.$^5$ : **F27B 7/20,** F27D 13/00,
C04B 7/60

(21) Anmeldenummer : **89908988.2**

(22) Anmeldetag : **27.07.89**

(86) Internationale Anmeldenummer :
**PCT/EP89/00885**

(87) Internationale Veröffentlichungsnummer :
**WO 90/02915 22.03.90 Gazette 90/07**

(54) **VERFAHREN UND EINRICHTUNG ZUR REDUZIERUNG VON SALZKREISLÄUFEN, INSBESONDERE IN ZEMENTÖFEN.**

(30) Priorität : **02.09.88 DE 3829853**

(43) Veröffentlichungstag der Anmeldung :
**28.08.91 Patentblatt 91/35**

(45) Bekanntmachung des Hinweises auf die
Patenterteilung :
**17.03.93 Patentblatt 93/11**

(84) Benannte Vertragsstaaten :
**AT BE CH DE FR GB IT LI LU NL SE**

(56) Entgegenhaltungen :
**EP-A- 0 143 395**
**DE-A- 2 201 765**

(56) Entgegenhaltungen :
**DE-B- 1 292 319**
**FR-A- 2 235 890**
**FR-A- 2 446 266**
**US-A- 3 288 450**

(73) Patentinhaber : **O & K ORENSTEIN & KOPPEL AG**
**Brunsbütteler Damm 144-208**
**W-1000 Berlin 20 (DE)**

(72) Erfinder : **KREFT, Wilfried**
**Kirschweg 12**
**W-4722 Ennigerloh (DE)**
Erfinder : **GÜNNEWIG, Ludger**
**Rudolf Schäfer Weg 10**
**W-4722 Ennigerloh (DE)**

EP 0 442 892 B1

## Beschreibung

Die Erfindung betrifft ein Verfahren zur Reduzierung von Salzkreisläufen, insbesondere in Zementöfen, indem dem Ofen über eine Bypaßleitung ein mit Schadstoffen belasteter Teilgasstrom entnommen wird, diese Ofengase abgekühlt und wieder in den Herstellungsprozess zurückgeführt werden.

Die Einsatzstoffe zur Zementherstellung enthalten Nebenbestandteile wie: Alkalien, Schwefel, Chlor, die im Bereich der Sinterzone zum Teil verdampfen und Kreisläufe aufbauen, die den Ofenbetrieb durch Ansatzbildung erheblich stören können.

Insbesondere treten diese Probleme auf, wenn zum Beispiel Abfallstoffe als Ersatzroh- und Brennstoffe zum Einsatz kommen. Diese Stoffe können sehr hohr Gehalte der obengenannten Nebenbestandteile enthalten, so daß es notwendig ist, die Salzkreisläufe in solchen Fällen zu reduzieren. Allgemein werden im St. d. T. für diesen Zweck Bypaßanlagen verwendet, die nach folgendem Prinzip arbeiten:

- Entnahme eines Teilgasstromes an der Übergangsstelle Ofen/Kalzinator, bzw. Rohmehl-Wärmetauscher.
- Abkühlung dieser Ofengase mit Frischluft auf ca. 400°C.
- Weitere Abkühlung der Gase mit Wasser auf ca. 150°C.
- Abscheidung der Staubteilchen in einem Filter und Entfernung der Stäube aus dem Brennprozess.

Nachteilig bei Anwendung dieser Technik sind der erhöhte Wärmebedarf der Anlage sowie die Rohmaterialverluste, die durch die Staubverwerfung entstehen. Besonders nachteilig ist es, solche Bypaßeinrichtungen in Ofenanlage zu installieren, die hohe Staubkreisläufe aufweisen, wie es beispielsweise bei Wärmetauschern, die nach dem Schacht-Vorwärmerprinzip arbeiten, der Fall ist.

Durch die EP-A-0154281 ist ein Verfahren sowie eine danach arbeitende Vorrichtung zur Herstellung von Zement vorbekannt, wobei Rohmaterial zu Klinker gebrannt, dieser abgekühlt und zu einem mehlförmigen Zement-Endprodukt vermahlen wird. Den Brennprozess störende Stoffe, wie Alkalien, Chloride und/oder Schwermetalle werden mittels eines Teilgasabzuges (Bypaß) wenigstens bis zur Unschädlichkeitsgrenze aus dem Brennprozess abgezweigt. Aus dem Klinker wird unter Zugabe von Zusatzstoffen ein Zwischenprodukt hergestellt, wobei beim Teilgasabzug anfallendes Gas und/oder darin enthaltene Stoffe mindestens zum Teil in das Zwischneprodukt eingeleitet werden. Das Zwischenprodukt wird zum Zement-Endprodukt vermahlen. Wie bereits eingangs angeführt wird durch die Abzweigung des Teilgasstromes letztendlich die Bildung von Salzkreisläufen nicht unterbunden, vielmehr werden die entstehenden Zwischenprodukte mit ihren Verunreinigungen in das Endprodukt integriert. Durch diese Maßnahme können je nach Zementart Probleme bei der Wiederverarbeitung entstehen.

Ferner ist durch die EP-A-0138057 ein Verfahren sowie eine danach arbeitende Anlage zur Herstellung von an Schadstoffen armem, insbesondere alkaliarmem, Zementklinker bekannt. Hierbei werden der Reaktionsgasstrom und der Abgasstrom der Klinkerstufe vor dem Einleiten in die unterste Wärmetauscherzone der Vorwärmstufe zu einem einzigen Suspensionsgasstrom miteinander vereinigt. Auch dieses Verfahren ist nicht in der Lage, den Effekt der Salzkreislaufbildung zu unterbinden.

Darüberhinaus ist durch die US-A 3,288,450 ein Verfahren sowie eine Anlage zur Herstellung von Zement bekannt. Das Ofenabgas wird zunächst einem Zyklon zugeführt. Über eine weitere Leitung sowie einen weiteren Zyklon gelangt der Abgasstrom in einen Schachtvorwärmer, der mit weiteren Zyklonstufen zusammenwirkt. Das Material wird im oberen Bereich des Schachtes aufgegeben und durchläuft die entsprechenden Zyklonstufen, wo es vorgewärmt werden soll, ehe es in den Bereich des Drehrohrofens geführt wird. Der staubbeladene Abgasstrom wird über einen Elektrofilter geführt, ehe er an die Außenluft abgegeben wird. Vom Elektrofilter führt eine Leitung zu dem Teil der Ofenabgasleitung, der zwischen den beiden ersten Zyklonstufen vor dem Schacht angeordnet ist. Über eine weitere Leitung kann kaltes pulverförmiges Material aus einem Behälter zugegeben werden. Durch Zugabe der Materialien aus dem Elektrofilter und/oder aus dem Behälter in den Abgasstrom wird dieser schlagartig abgekühlt, wobei Salzverbindungen auf den Staub- oder Materialpartikeln kondensieren bzw. sublimieren. Dieser Staub wird in der ersten Zyklonstufe abgeschieden und dem Drehrohrfen zugeführt. Nachteilig an diesem Verfahren ist festzustellen, daß der gesamte Abgasstrom eine schlagartige Abkühlung erfährt, die sich nachteilig auf den sich anschließenden Prozeß der Vorkalzinierung bzw. der Vorwärmung der Rohmaterialien auswirkt, da kein ausreichendes Temperaturniveau mehr gegeben ist. Daraus resultiert einerseits eine mangelhafte Vorkalzinierung mit dem damit verbundenen erhöhten Wärmebedarf der Ofenanlage.

Der Erfindung liegt die Aufgabe zugrunde, ein Verfahren sowie eine Einrichtung zur Reduzierung von Salzkreisläufen, insbesondere in Zementöfen zu konzipieren, die einerseits die genannten Nachteile einer Bypaßanlage weitestgehend vermeidet, die verfahrenstechnischen Voraussetzungen jedoch erfüllt.

Diese Aufgabe wird verfahrensgemäß gelöst durch einen mehrstufigen Prozess der Staubabscheidung aus dem Teilgasstrom, wobei die Gase zwischen den Prozessen der Staubabscheidung abgekühlt und im Anschluß an die Staubabscheidung an die Stelle des Rohmehl-Wärmetauschers zurückgeführt werden, die etwa das gleiche Temperaturniveau der Bypaßleitung im Anschluß an den Prozeß der Staubabscheidung aufweist.

Vorzugsweise kommt ein zweistufiger Prozeß der Staubabscheidung zur Anwendung, wobei der abgezweigte Teilgasstrom zunächst einem Vorabscheider zugeführt wird, die Gase nach der Staubvorabscheidung mit Luft auf etwa 600° C abgekühlt werden und die zweite Stufe der Staubabscheidung in einem mit hohem Abscheide- und Trenngrad ausgebildeten Zyklon erfolgt. Der aus der Vorabscheiderstufe sowie dem Zyklon abgeschiedene Staub wird einem weiteren Gedanken der Erfindung gemäß wieder in die Sinterzone zurückgeführt.

Infolge der spontanen Abkühlung der Gase mit Frischluft auf ca. 600° C kondensieren bzw. sublimieren die Salzverbindungen auf den Staubpartikeln. Ein speziell ausgebildetet HochleistungsZyklon mit hohem Abscheidegrad und Trenngrad für Feinpartikel sorgt für eine effektive Staubabtrennung. Auf diese Weise entstehen folgende Vorteile für die vorgeschlagene Bypaß-Konzeption:

- Niedriger Staubverlust durch mindestens zweistufige Staubabscheidung.
- Geringer Wärmebedarf der Ofenanlage, da durch die Gasrückführung in den Wärmetauscher eine Wärmeausnutzung für die Rohmehl-Vorwärmung erfolgt.

Im Gegensatz zum St. d. T. wird durch diese erfindungsgemäße Lösung eine hohe Effektivität bei gleichfalls hoher Wirtschaftlichkeit erzielt. Eine Einrichtung zur Reduzierung von Salzkreisläufen ist dadurch gekennzeichnet, daß die Leitung im Bereich des Ofeneinlaufes der Brennanlage vorgesehen und mit einem Staubvorabscheider verbundden ist. Der Staubvorabscheider ist über eine Leitung mit einem Hochleistungs-Zyklon verbunden, wobei im Bereich dieser Leitung Frischluft zuführbar ist. Ferner wird vorgeschlagen, den Hochleitungs-Zyklon über eine weitere Leitung mit dem Rohmehl-Wärmetauscher zu verbinden. Vorzugsweise wird der Bypaßstaub in den Einlaufbereich der Brennanlage zurückgeführt.

Die Erfindung ist anhand eines Ausführungsbeispieles in der Zeichnung dargestellt und wird wie folgt beschrieben:

Figur 1 zeigt die erfindungsgemäße Lösung der Bypaßanlage

Figur 2 drei verschiedene Bypaßvarianten

Figur 1 zeigt die erfindungsgemäße Bypaßanlage anhand eines Funktionsschaubildes. Dargestellt sind der Drehrohrofen 1 als Sinterstufe, eine Kalzinierstufe 2 sowie eine aus mehreren Wärmetauschern 3-7 gebildete Vorwärmstufe. Über eine Bypaßleitung 8 wird dem Drehrohrofen 1 im Bereich seiner Einlaufstelle 9 ein Teilgasstrom entnommen. Dieser Teilgasstrom wird einem Staubvorabscheider 10 zugeführt, wobei bereits abgeschiedene Staubpartikel wieder in den Brennprozeß zurückgeführt werden. Über eine Leitung 11 wird der Teilgasstrom einem Hochleistungs-Zyklon 12 zugeführt, wobei im Bereich dieser Leitung 11 über Gebläse 13 oder dgl. Frischluft zugeführt wird. Der Teilgasstrom wird schlagartig auf etwa 600° C abgekühlt, bei der die Salzverbindungen auf den Staubpartikeln kondensieren bzw. sublimieren. Im Hochleistungs-Zyklon 12 abgeschiedener Staub wird ebenfalls im Bereich 9 des Ofens 1 in den Brennprozeß zurückgeführt. Der noch etwa 600° C warme Teilgasstrom wird mittels eines Gebläses 14 in den Bereich der Vorwärmerstufe zurückgeführt. Hierzu ist eine weitere Leitung 15 vorgesehen, die an die Stelle 16 des Rohmehl-Wärmetauschers geführt wird, wo etwa 600° C Gastemperatur vorherrschen.

Figur 2 zeigt im wesentlichen die gleiche Anlage als Funktionsschaubild wie sie in Figur 1 dargestellt ist, mit dem Unterschied, daß hier drei Bypaßvarianten beinhaltet sind. Die drei Bypaßvarianten werden wie folgt erläutert:

A - Bypaßgase werden entnommen und mit Luft auf etwa 600° C abgekühlt. In einem Hochleistungs-Zyklon 12 erfolgt die Entstaubung und die Zyklonabgase werden in den Wärmetauscher zurückgeführt.

B - Wie A, jedoch wird ein Vorabscheider 10 dazugeschaltet, um die Bypaßstaubmenge niedrig zu halten.

C - Nach Vorabscheidung in einem Zyklon 12 wird mit Luft auf etwa 350° C abgekühlt und die Gase durch E-Filter 17 entstaubt. Eine Rückführung der Gase in den Wärmetauscher entfällt somit.

Nachstehend wird ein tabellarischer Vergleich der Bypaßvarianten A-C vorgenommen.

## Vergleich der Bypaßvarianten (bezogen auf 5 % Bypaß)

| Version | A | B | C |
|---|---|---|---|
| Wärmeverluste kcal/kg Kl. | 31 | 24 | 43 |
| Frischluftmenge Nm$^3$/kg Kl. | 0,094 | 0,082 | 0,214 |
| Mischgasmenge Nm$^3$/kg Kl. | 0,165 | 0,152 | 0,284 |
| Mischgastemp. Grad C | 600 | 600 | 350 |
| Bypaßstaub zur Zementmühle t/h | 2,76 | 1,35 | 1,53 |
| Bypaßeffektivität % | 90 | 80 | 100 |
| Chlorgehalt im Heißmehl % | 1,56 | 1,75 | 1,40 |
| Kraftbedarf Ventilatoren % | 100 | 92 | 172 |
| Komplexität derAnlage | gering | gering | hoch |

Die Betrachtung der Werte ergibt eine eindeutige Überlegenheit der Variante B.
- Niedrige Gasmengen
- Geringe Staubmenge
- Geringe Komplexität
- Chlorgehalt im Heißmehl kleiner 2 %, d.h. unkritische Konzentration für Verstopfungsgefahr
- Niedrige Betriebskosten
Für die E-Filterversion stellt sich die Kosten/Nutzen-Relation sehr ungünstig dar.

## Patentansprüche

1. Verfahren zur Reduzierung von Salzkreisläufen, insbesondere in Zementöfen, indem dem Ofen (1) über eine Bypaßleitung (8) ein mit Schadstoffen belasteter Teilgasstrom entnommen wird, diese Ofengase abgekühlt und wieder in den Herstellungprozess zurückgeführt werden, gekennzeichnet durch einen mehrstufigen Prozeß der Staubabscheidung aus dem Teilgasstrom, wobei die Gase zwischen den Prozessen der Staubabscheidung abgekühlt und im Anschluß an die Staubabscheidung an die Stelle (16) des Rohmehl-Wärmetauschers (5) zurückgeführt werden, die etwa das gleiche Temperaturniveau der Bypaßleitung (15) im Anschluß an den Prozeß der Staubabscheidung aufweist.

2. Verfahren nach Anspruch 1, gekennzeichnet durch einen zweistufigen Prozeß (10,12) der Staubabscheidung.

3. Verfahren nach den Ansprüchen 1 und 2, dadurch gekennzeichnet, daß der Teilgasstrom zunächst einem Vorabscheider (10) zugeführt wird, daß die Gase nach der Staubvorabscheidung mit Luft auf etwa 600° C abgekühlt werden und daß die zweite Stufe der Staubabscheidung in einem mit hohem Abscheide- und Tenngrad ausgebildeten Zyklon (12) erfolgt.

4. Verfahren nach den Ansprüchen 1 bis 3, dadurch gekennzeichnet, daß der abgeschiedene Staub wieder in die Sinterzone (9) zurückgeführt wird.

5. Einrichtung zur Reduzierung von Salzkreisläufen, insbesondere in Zementöfen, mit einer einen Vorwärmer (3-7), eine Kalzinierstufe (2), eine Sinterstufe (1) sowie eine Kühlstufe (10,12) aufweisenden Brennanlage, wobei die Brennanlage eine Bypaßleitung (8) zum Teilabzug von Gas aufweist, dadurch gekennzeichnet, daß die Leitung (8) im Bereich des Ofeneinlaufes (9) der Brennanlage vorgesehen und mit einem Staubvorabscheider (10) verbunden ist, daß der Staubvorabscheider (10) über eine Leitung (11) mit einem Hochleistungs-Zyklon (12) verbunden ist, wobei im Bereich dieser Leitung (11) Frischluft (13) zuführbar ist und daß der Hochleistung-Zyklon (12) über eine weitere Leitung (15) mit dem Rohmehl-Wärmetauscher verbunden ist.

6. Einrichtung nach Anspruchen 5, dadurch gekennzeichnet, daß der Bypaßstaub in den Bereich (9) der Brennanlage zurückführbar ist.

## Claims

1. Process for reducing salt cycles, in particular in cement kilns, by removing from the kiln (1) by way of a bypass line (8) a partial gas stream charged with noxious substances, these kiln gases being cooled down and fed back into the manufacturing process again, characterised by a multi-stage process for separating dust from the partial gas stream, the gases being cooled between the dust separation processes and, following the dust separation, fed back to the point (16) of the raw meal heat exchanger (5), which is at approximately the same temperature level as the bypass line (15) following the dust separation process.

2. Process according to Claim 1, characterised by a two-stage dust separation process (10,12).

3. Process according to Claims 1 and 2, characterised in that the partial gas stream is first fed to a pre-separator (10), that the gases are cooled down with air to approximately 600°C after the dust pre-separation, and that the second stage of the dust separation takes place in a cyclone (12) having a high degree of precipitation and separation.

4. Process according to Claims 1 to 3, characterised in that the dust separated out is fed back into the sinter zone (9) again.

5. Arrangement for reducing salt cycles, in particular In cement kilns, with a burning installation having a pre-heater (3-7), a calcining stage (2), a sinter stage (1) and also a cooling stage (10,12), the burning installation having a bypass line (8) for the partial removal of the gas, characterised in that the line (8) is provided in the region of the kiln inlet (9) of the burning installation and is connected to a dust pre-separator (10), that the dust pre-separator (10) is connected by way of a line (11) to a high performance cyclone (12), it being possible to feed in fresh air (13) in the region of this line (11), and that the high performance cyclone (12) is connected by way of a further line (15) to the raw meal heat exchanger.

6. Arrangement according to Claim 5, characterised in that the bypass dust is arranged to be fed back into the region (9) of the burning installation.

## Revendications

1. Procédé pour réduire des circuits salins, notamment dans des fours à ciment, selon lequel un courant de gaz partiels chargé de substances nocives est prélevé du four (1) par l'intermédiaire d'une canalisation by-pass (8), et ces gaz du four sont refroidis et renvoyés à nouveau au processus de fabrication, caractérisé par un processus, en plusieurs étapes, de séparation de la poussière à partir du courant de gaz partiels, les gaz étant refroidis entre les opérations de séparation de la poussière et étant renvoyés, après l'opération de séparation de la poussière, au point (16) de l'échangeur de chaleur (5) pour la farine crue, qui possède une température située approximativement au même niveau que celle de la canalisation de by-pass (15) située en aval de l'opération de séparation de la poussière.

2. Procédé selon la revendication 1, caractérisé par un processus en deux étapes (10,12) de séparation de la poussière.

3. Procédé selon les revendications 1 et 2, caractérisé en ce que le courant de gaz partiel est envoyé tout d'abord à un dispositif de séparation préalable ( 10 ), que les gaz sont refroidis, après la préséparation de la poussière avec de l'air à environ 600°C et que la seconde étape de séparation de la poussière s'effectue dans un cyclone (12) agencé de manière à fournir un degré élevé de séparation et de dépôt.

4. Procédé selon la revendication 1 à 3, caractérisé en ce que la poussière séparée est renvoyée à nouveau dans la zone de frittage (9).

5. Dispositif pour réduire des circuits salins, notamment dans des fours à ciment, et comportant une installation de combustion possédant un dispositif de préchauffage (3-7), un étage de calcination (2), un étage de frittage (1) ainsi qu'un étage de refroidissement (10,12), l'installation de combustion comportant une canalisation de by-pass (8) pour réaliser un prélèvement partiel de gaz, caractérisé en ce que la canalisation (8) est prévue au voisinage de l'entrée (9) du four de l'installation de combustion et est raccordée à un dispositif (10) de préséparation de la poussière, que le dispositif (10) de préséparation de la poussière est raccordé par l'intermédiaire d'une canalisation (11) à un cyclone de grande puissance (12), de l'air frais (13) pouvant être amené au niveau de cette canalisation (11), et que le cyclone de grande puissance (12) est raccordé par l'intermédiaire d'une autre canalisation (15) à l'échangeur de chaleur pour la farine crue.

6. Dispositif selon la revendication 5, caractérisé en ce que la poussière située dans le by-pass peut être renvoyée dans la zone (9) de l'installation de combustion.